# EUROPEAN PATENT SPECIFICATION

(11) **EP 3 118 089 B1**
(45) Date of publication and mention of the grant of the patent: **19.09.2018**
(21) Application number: 16175636.6
(22) Date of filing: 22.06.2016
(51) Int. Cl.: B62D 25/20

(54) **UNDERBODY STRUCTURE FOR A MOTOR-VEHICLE**
UNTERBAUSTRUKTUR FÜR EIN KRAFTFAHRZEUG
STRUCTURE DE SOUBASSEMENT POUR UN VÉHICULE AUTOMOBILE

(30) Priority: 13.07.2015 IT UB20152104
(43) Date of publication of application: 18.01.2017
(73) Proprietor: FCA Italy S.p.A., 10135 Torino (IT)
(72) Inventor: STOENESCU, Bogdan, 10142 Torino (IT); TROCINO, Cristian, 10135 Torino (IT); DEL NERO, Gianfranco, 10135 Torino (IT)
(74) Representative: Notaro, Giancarlo

(56) References cited:
- DE-A1-102010 048 350
- DE-A1-102011 012 124
- JP-A- 2012 171 611
- US-A1- 2008 231 078

## Description

### Field of the invention

The present invention relates to a method for the modular production of motor-vehicle structures for two different segments or classes of motor vehicles, for obtaining structures of different dimensions in the transversal direction, of the type indicated in claim 1.

A modular floor construction of the type indicated above is described for example in the document DE 10 2010 048 350 A1. Motor-vehicle structures of the type indicated in the preamble of claim 1 are known from US20080231078A1 and JP2012171611A.

### Object of the invention

The invention has the purpose of simplifying and rationalizing the production of motor-vehicles belonging to different segments, which have dimensions that are different one from each other, in particular in the transversal direction.

### Summary of the invention

In view to achieve the above object, the subject of the invention is a method having the featueres illustrated in the annexed claim 1.

In the present description and in the following claims the term "transversal" is used with reference to a horizontal direction, normally referred to as "Y direction" by persons skilled in the branch, perpendicular to the longitudinal direction of the motor vehicle (the longitudinal direction is, instead, denoted by "X", whereas the vertical direction is denoted by "Z")

Thanks to the aforesaid characteristics, the method according to the invention exploits the principle of modularity in the Y direction to pass from a lower segment to an upper segment, with the advantage, over a conventional solution, of maintaining the same floor structure and hence the same attachments for other systems present on the motor vehicles. The motor-vehicle structure according to the invention moreover enables simplification of an assembly line designed to produce motor vehicles of both segments.

### Detailed description of a preferred embodiment

Further characteristics and advantages of the invention will emerge from the following description with reference to the annexed drawings, which are provided purely by way of non-limiting example and in which:
- Figure 1 is a partial perspective view of an underbody structure of a motor-vehicle;
- Figure 2 is a view from beneath of the underbody structure of Figure 1;
- Figure 3 is a partial cross-sectional schematic view in a plane orthogonal to the longitudinal direction of the motor-vehicle, of two different underbody structures that can be obtained with the method according to the invention and are designed for motor vehicles belonging to two different segments;
- Figures 4, 5, and 6 are further cross-sectional schematic views that show the principle that underlies the present invention;
- Figures 7 and 8 are cross-sectional views of two examples of embodiment of underbody structures that can be obtained with the method according to the invention and are designed for motor vehicles belonging to two different segments;
- Figure 9 is a perspective view of a detail of an underbody structure that can be obtained with the method according to the invention; and
- Figure 10 is a partial and sectioned perspective view of an underbody structure according to the prior art.

In the drawings, the reference number 1 designates in general an underbody structure obtained with the method according to the invention, comprising a floor structure 2 constituted by sheet-metal elements welded together, at which sides are also welded a plurality of perimetral body elements, each designated by the reference number 3.

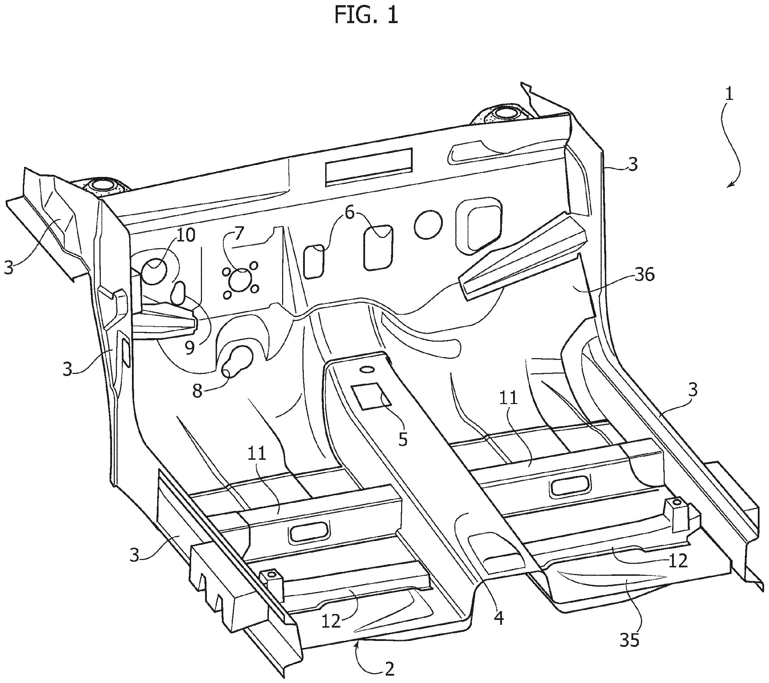

In the specific non-limiting example illustrated in Figure 1, the floor structure 2 has a main horizontal portion 35 and a front portion 36 welded to the portion 35. The front portion 36 substantially extends in a transverse vertical plane and includes a bottom part thereof bent horizontally and radiused to the main horizontal portion 35. Projecting from said main horizontal portion 35 is a longitudinal central tunnel 4 having a trapezoidal cross section defining a cavity open downwards. The tunnel 4 has a rectangular opening 5 on its top surface, in the proximity of the vertical portion 36 of the floor structure 2, for the passage of the control members of the gear lever (not represented) of the motor-vehicle. Once again in the case of the example illustrated, two openings 6 of ovalized shape are formed on the vertical portion 36 of the floor structure 2, for connection to an air-conditioning unit (not represented) of the motor-vehicle. The vertical portion 36 of the floor structure 2 moreover has a circular opening 7 for connection to a set of pedals (not represented) of the motor-vehicle, and an opening 8 for connection to steering members (not represented) of the motor-vehicle. Furthermore, the vertical portion of the floor structure 2 comprises an opening 9 for enabling connection to a clutch (not represented) for the corresponding control members and an opening 10 for passage of cables (not represented).

Two half-cross-members 11 are integrated in the horizontal portion 35 of the floor structure 2 which are located at the two sides of the tunnel 4, aligned to one another, and each welded at one end to the tunnel 4 and at the opposite end to one of the perimetral elements 3. Furthermore, the floor structure 2 has also a pair of half-cross-members 12, which are spaced apart longitudinally from the half-cross-members 11, behind them, and are also each welded at one end to the tunnel 4 and at the opposite end to one of the perimetral elements 3.

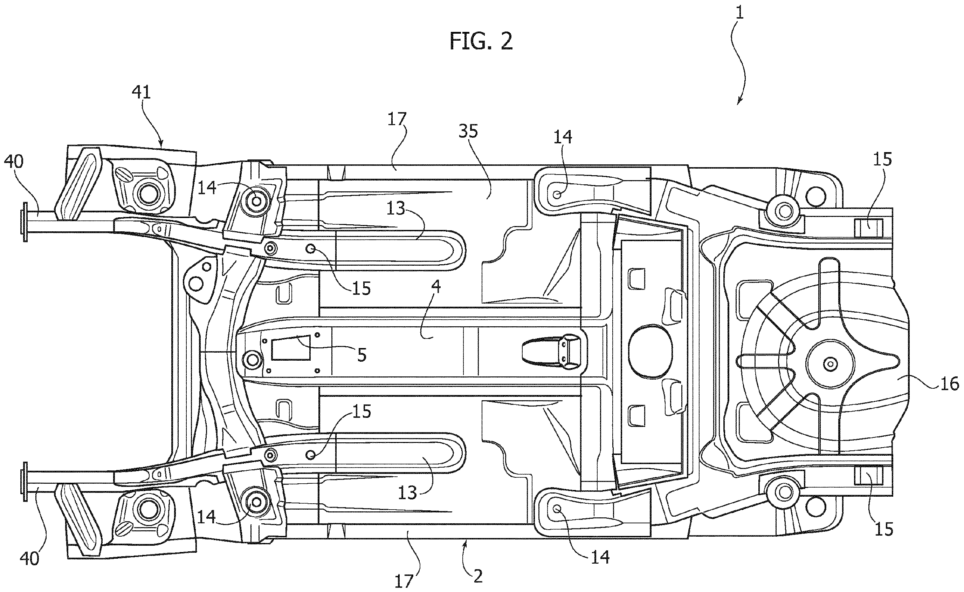

As may be seen in the view from beneath of figure 2, the underbody structure 1 includes a pair of intermediate side members 13, with omega section, each of which extends in an intermediate area between the tunnel 4 and a respective side of the floor structure 2. Each intermediate side member 13 is welded to the bottom surface of the floor structure 2, with a rear part welded to the main portion 35 and a front part welded to the portion 36, in such a way as to contribute to the stiffness of the entire floor structure. The front part of the intermediate side members 13 extends until it partially covers two longitudinal struts 40 (see figure 2), which are part of a front subassembly 41 of the body of the motor-vehicle.

Again in figure 2, two side members are designated by the reference number 17 that are welded to the two longitudinal lateral edges of the floor structure 2.

Furthermore, four holes designated by the reference number 14 are positioned adjacent to four vertices of the perimeter of the horizontal portion 35 of the floor structure 2, which are intended to receive engagement members carried by the equipment of the production line, for conveying the structure, in particular along a paint line and along the assembly line of the components of the motor-vehicle. The structure also has four holes 15 that are intended to receive members for engaging and supporting the structure along the line for assembly and welding the the motor-vehicle body. A first pair of holes 15 is positioned adjacent to the spare-wheel compartment 16 of the floor structure 2, in the proximity of the lateral edges of the underbody structure 1, whereas a second pair of holes 15 is positioned on the intermediate side members 13.

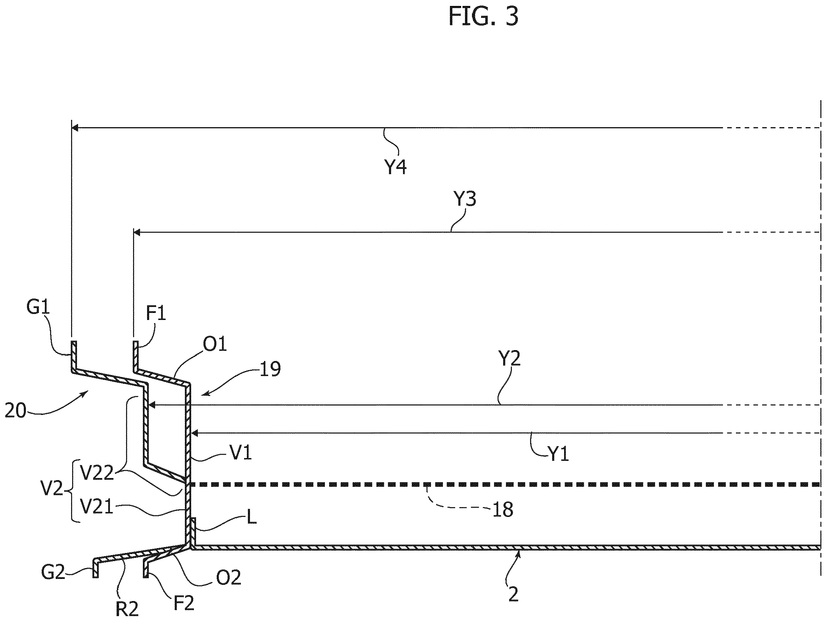

Figure 3 is a partial schematic cross-sectional view, in a plane which is orthogonal to the longitudinal direction of the motor-vehicle, of two different underbody structures that can be obtained with the method according to the invention and are intended for motor-vehicles belonging to two different segments.

In the case of the specific example, a first underbody structure is for a motor-vehicle belonging to the so-called A segment, whereas a second underbody structure is for a motor-vehicle belonging to the so-called B segment.

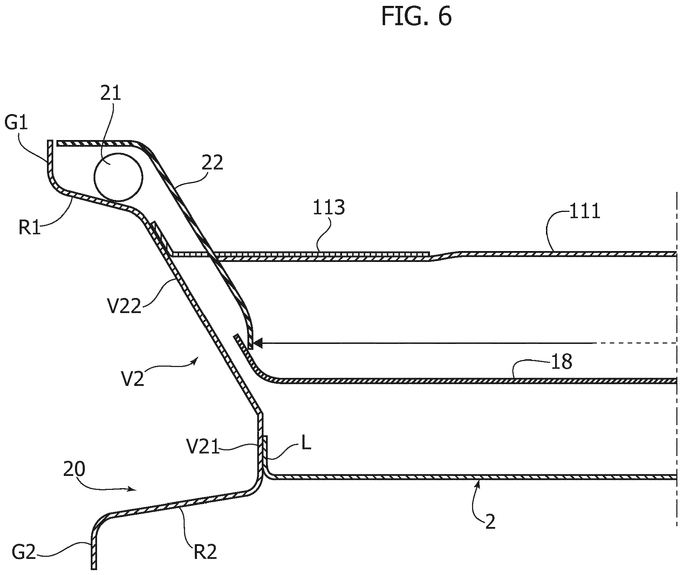

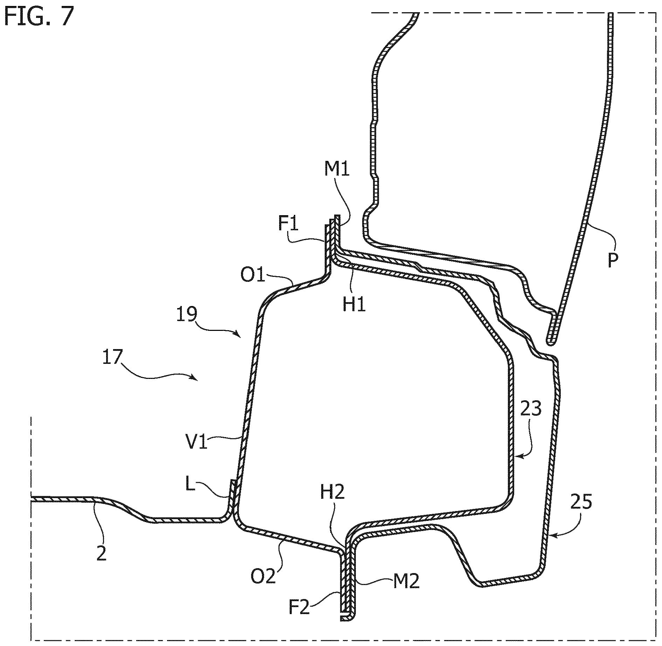

According to the method of the invention, the aforesaid two underbody structures fir A-segment and B-segment are obtained starting from a common floor structure 2 that is identical in the two cases. The aforesaid side members 17 are welded on each side of the structure 2, these side members 17 having a different conformation for the structures of the two segments A and B. As will be described in detail below with reference to figures 6 and 7, each side member 17 comprises an inner element of side member, to which is welded the respective side of the floor structure, and an outer element of side member.

Figure 3 is a schematic illustration of a side of the floor structure 2 (common to the two segments A and B) and of the inner element of side member that is welded to the aforesaid side and is constituted by an element 19 in the case of the A-segment structure and by an element 20 in the case of the B-segment structure.

Figure 3 shows with a dashed line also a mat 18, which is supported by a layer of foamed plastic material, with sound-insulating purpose, in a position raised with respect to the floor structure 2, and is intended for defining the floor of the passenger compartment of the motor vehicle.

Both of the two inner elements 19, 20 of side member have a cross-section shaped substantially like an omega oriented vertically.

The inner element 19 of side member, used for forming A-segment structures, has a substantially vertical intermediate wall V1 and an upper wall O1 and a lower wall 02 that are slightly inclined with respect to a horizontal direction, one upwards and the other downwards, in the direction of an upper vertical flange F1 and of a lower vertical flange F2.

The inner element 20 of side member of the B segment also has an intermediate wall V2 and an upper wall R1 and a lower wall R2 that are slightly inclined with respect to a horizontal direction, one upwards and the other downwards, in the direction of an upper vertical flange G1 and of a lower vertical flange G2.

As illustrated in figures 3 to 9, the intermediate wall V2 of the entire element 20 for the B segment is constituted by a lower wall portion V21 that is substantially vertical and an upper wall portion V22 that at least for a part is markedly inclined outwards in the direction of the upper wall R1. The portion V22 occupies the greater part of the vertical extension of the intermediate wall V2 in such a way that the space defined between the side members 17 above the floor structure 2 is considerably increased in the case of the B-segment structure as compared to the A-segment structure, notwithstanding the use of a common floor structure 2. In particular, with reference to figure 3, the distance between the intermediate walls of the two inner elements of side member passes from the value Y1 to the value Y2, whereas the distance between the upper flanges passes from Y3 to Y4. For example, in a concrete embodiment the nominal values of Y1, Y2, Y3, and Y4 are 1230 mm, 1310 mm, 1315 mm, and 1400 mm, respectively.

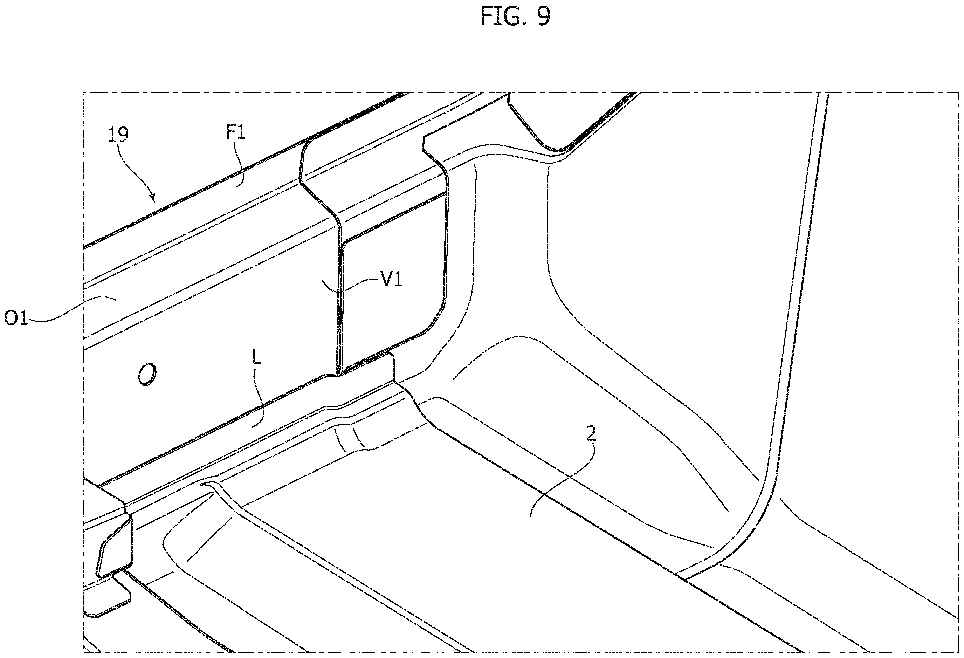

A further important characteristic of the invention lies in the fact that along a prevalent portion of its length the lateral edge of the floor structure 2 has a flange L vertically bent upwardly and welded to the intermediate wall V1 or to the intermediate wall V2 in the case of an A-segment structure or of a B-segment structure, respectively. This characteristic is also visible in Figure 9. Thanks to this feature, the underbody structure 1 is well sealed in such a way as avoiding eventual infiltrations of water.

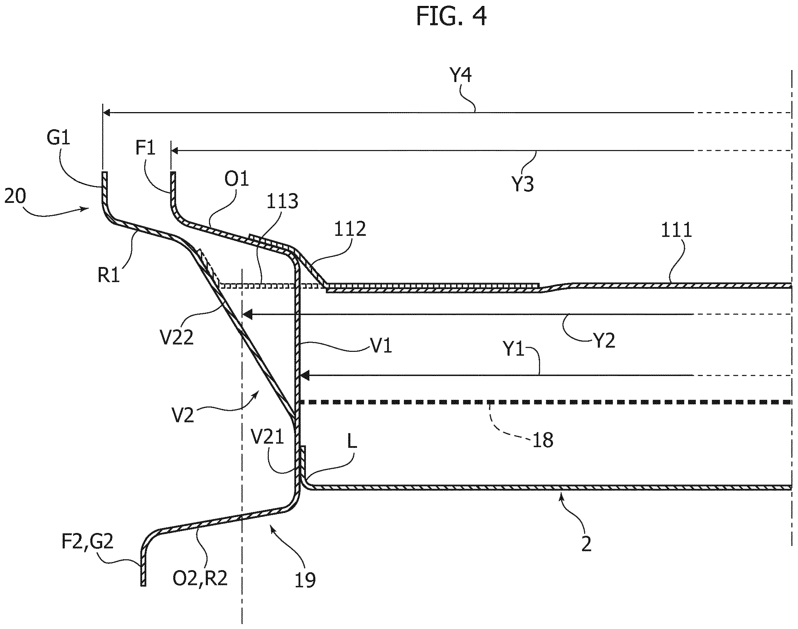

As may be seen in figure 4, the two inner elements 19 of side member and the two inner elements 20 of side member designed for the A-segment structure and for the B-segment structure, respectively, are connected together via the cross-member 11, in such a way as to guarantee the necessary stiffness of the underbody structure 1. The cross-member 11 comprises a central portion 111 that is identical for the segments A and B, and end portions 112, 113 of different lengths for the segments A and B.

Figure 4 illustrates a concrete embodiment that has the same concept already illustrated in figure 3, but with a different conformation of the inner element 20 of side member designed for the B segment. In the case of Figure 3, the intermediate wall V2 of the element 20 has a lower portion V21 that is vertical and an upper portion V22 that has a part inclined outwards and a part that is again vertical, adjacent to the wall R1. In the case of figure 4, the intermediate wall V2 has again the lower portion V21 that is vertical and the upper portion V22 that is entirely inclined outwards. Furthermore, in the case of figure 4, the lower walls O2 and R2 and the lower flanges F2 and G2 coincide with one another. The dimensions Y1-Y4 are also indicated in figure 4. In a case of concrete embodiment, these dimensions correspond to 1230 mm, 1310 mm, 1343 mm, and 1400 mm, respectively.

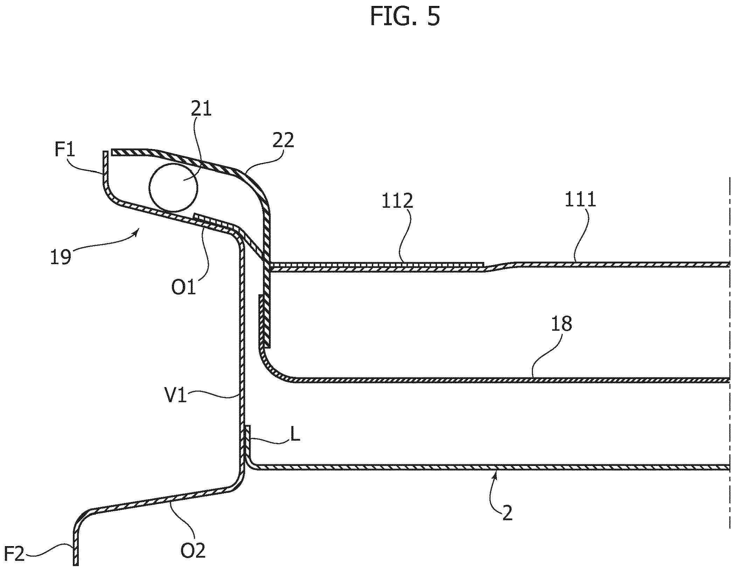

Figures 5 and 6 show the same cross-section of figure 4 separately for the case of the A-segment structure and for the case of the B-segment structure. These figures further represent a covering panel 22 made of plastic material used for covering an area of passage of a cable harness 21, above the inner element 19 (figure 5) or 20 (figure 6), throughout the longitudinal extension of the underbody structure 1.

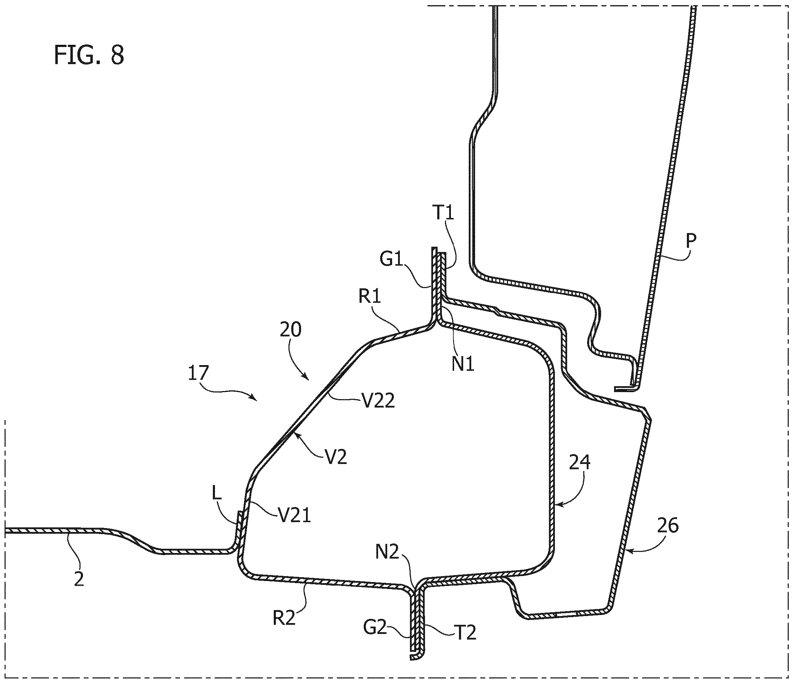

Figures 7 and 8 are cross-sectional views of two examples of embodiment of two underbody structures, for the A segment and for the B segment, respectively. These figures show that the flange L of the lateral edge of the floor structure 2 is welded to each inner element (19 or 20) of side member.

For the A-segment structure, the inner element 19 of side member (figure 7) is welded to an outer element 23 of side member, which has a cross-section shaped like a oriented vertically omega with the cavity facing the cavity of the inner element 19 of side member. Welding is carried out at flanges H1, H2 of the element 23 that are juxtaposed to the vertical flanges F1, F2 of the element 19. A structure of side member 17 with closed cross section is thus created. This structure is completed by a third element 25, which also has a cross-section with a vertically oriented omega shape. The element 25 covers the side member 17 on the outside and has flanges M1, M2 welded together with the flanges F1, H1 and F2, H2.

For the B-segment structure, the inner element 20 of side member (figure 8) is welded to an outer element 24 of side member, having a cross-section shaped like a vertical omega with the cavity facing the cavity of the inner element 20 of side member. Welding is carried out at flanges N1, N2 of the element 24 that are juxtaposed to the vertical flanges G1, G2 of the element 20. A structure of side member 17 with closed cross section is thus created. This structure is completed by a third element 26, which also has a cross section with a vertically oriented omega shape. The element 26 covers the side member 17 on the outside and has flanges T1, T2 welded together with the flanges G1, N1 and G2, N2.

Once again with reference to figures 7 and 8, a door frame P is shown therein with a bottom side that, in the closed position of the door, faces the top wall of the element 25 or 26.

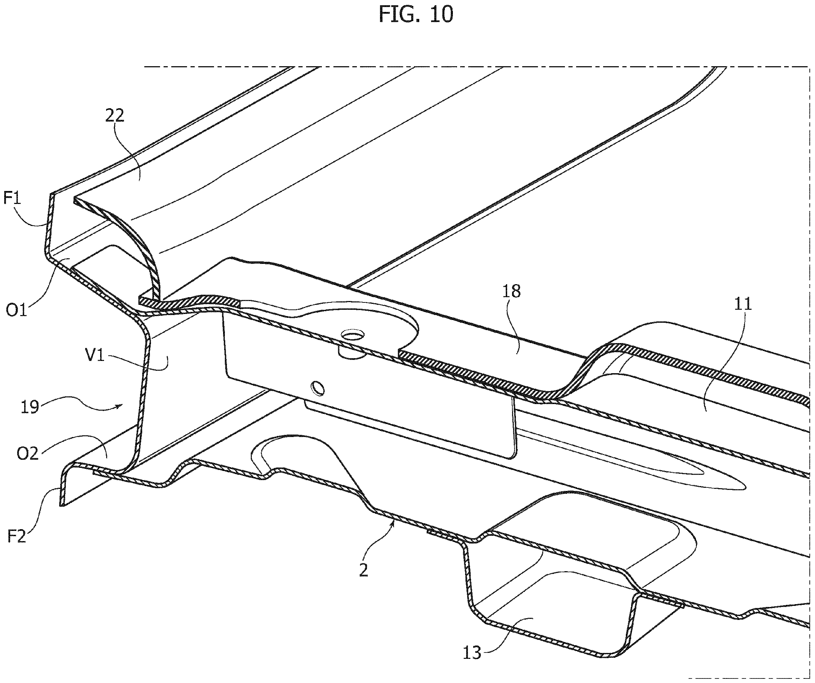

In figure 9 a perspective view of a portion of the underbody structure of a motor vehicle is illustrated, in the specific case for the A segment. The lateral edge of the floor structure 2 is visible therein which has for a prevalent portion of its lenght a flange L vertically bent upwards and welded to the intermediate wall V1 of the respective inner element 19 of side member. The embodiment illustrated here presents the advantage of having a structure well sealed and consequently resistant to any possible infiltration of water. As previously said, the structure illustrated in figure 9 differs from the conventional solution shown in figure 10. In this figure, the parts common to those of figure 5 are designated by the same reference numbers. In this known solution, the flange L bent vertically upwards is not envisaged, and the floor structure 2 has each lateral edge welded under the wall 02 of the inner element 19 of side member.

The above arrangement renders the structure more subjected to infiltration of water.

As is evident from the foregoing description, the method according to the invention exploits a principle of modularity to obtain structures of different dimensions in the Y direction, which enables considerable simplification of the manufacturing equipment.

Of course, without prejudice to the principle of the invention, the details of construction and the embodiments may vary widely with respect to what is described and illustrated herein purely by way of example, without thereby departing from the scope of the present invention.

## Claims

1. A method for the modular production of motor-vehicle structures for two different segments or classes of motor vehicles, for obtaining structures of different dimensions in the transversal direction (Y), wherein for each motor-vehicle structure an underbody structure (1) is provided including a floor structure (2) and two side members (17), which are welded to two longitudinal lateral edges of the floor structure (2),
said method being **characterized in that**:
- said floor structure (2) is in common and suitable for producing both motor-vehicle structures belonging to a first lower segment of motor-vehicles, and motor-vehicle structures belonging to a second upper segment of motor-vehicles, wherein said lower segment is **characterized by** a smaller dimension of the motor-vehicle at least in a transversal direction,
- in order to form motor-vehicle structures of the first segment and of the second segment, side members (17) are used which are different one from each other always in combination with said common floor structure (2),
- in such a way that the space defined between the side members (17) above said floor structure (2) is considerably increased in the case of said motor-vehicle structure of the upper segment compared to the motor-vehicle structure of the lower segment, despite the use of a common floor structure (2),
- each side member (17) comprises an inner element (19, 20) of side member, welded to a respective longitudinal lateral edge of the floor structure (2), and an outer element (23, 24) of side member, welded to the inner element (19, 20) of side member,
- said elements (19, 20, 23, 24) of side member have cross-sections each defining a vertically oriented omega shape, with cavities facing each other and upper flanges (F1, G1) and lower flanges (F2, G2) welded together,
- the two inner elements (19) of side member used for forming motor-vehicle structures belonging to the lower segment each have a substantially vertical intermediate wall (V1) and an upper wall (O1) and a lower wall (02) which are slightly inclined with respect to a horizontal direction, one upwardly and the other downwardly, in the direction of the upper vertical flange (F1) and of the lower vertical flange (F2);
- the two inner elements (20) of side member used for forming motor-vehicle structures belonging to the upper segment also each have an intermediate wall (V2) and an upper wall (R1) and a lower wall (R2) which are slightly inclined with respect to a horizontal direction, one upwards and the other downwards, in the direction of the upper vertical flange (G1) and of the bottom vertical flange (G2), said intermediate wall (V2) having a lower portion (V21) which is substantially vertical and an upper portion (V22) which at least for a part is markedly inclined outwardly in the direction of said upper wall (R1), said upper portion (V22) of the intermediate wall (V2) occupying the greater part of the vertical extension of said intermediate wall (V2),
- each lateral edge of the floor structure (2) has for a prevalent portion of its length a flange (L) vertically bent upwardly, welded to the intermediate wall of the respective inner element (19, 20) of side member.

2. Method for the production of motor-vehicle structures according to claim 1, **characterized in that** the intermediate walls (V1, V2) of the two inner elements (19, 20) of side member are connected together by means of at least one cross-member (11), including:
- a central portion (11) which is common for the motor-vehicle structure of the lower segment and for the motor-vehicle structure of the upper segment; and
- end portions, which are constituted by separate elements (112,113) rigidly connected to opposite ends of said central portion and having different lengths for the motor-vehicle structure of the lower segment and for the motor-vehicle structure of the upper segment.

## Patentansprüche

1. Verfahren zur modularen Herstellung von Kraftfahrzeugstrukturen für zwei unterschiedliche Segmente oder Klassen an Kraftfahrzeugen zum Erhalten von Strukturen mit unterschiedlichen Abmessungen in der transversalen Richtung (Y), wobei für jede Kraftfahrzeugstruktur eine Unterbaustruktur (1) vorgesehen ist mit einer Bodenstruktur (2) und zwei Seitenkomponenten (17), die mit den zwei in Längsrichtung verlaufenden lateralen Kanten der Bodenstruktur (2) verschweißt sind,
wobei das Verfahren **dadurch gekennzeichnet ist, dass**:
- die Bodenstruktur (2) gemeinsam und geeignet zur Herstellung sowohl von Kraftfahrzeugstrukturen ist, die zu einem ersten niedrigeren Segment an Kraftfahrzeugen gehören, als auch für Kraftfahrzeugstrukturen, die zu einem zweiten höheren Segment an Kraftfahrzeugen gehören, wobei sich das niedrigere Segment durch eine kleinere Abmessung des Kraftfahrzeugs zumindest in einer transversalen Richtung auszeichnet,
- zur Herstellung der Kraftfahrzeugstrukturen des ersten Segments und des zweiten Segments die Seitenkomponenten (17), die voneinander verschieden sind, stets in Kombination mit der gemeinsamen Bodenstruktur (2) verwendet werden,
- derart, dass der zwischen den Seitenkomponenten (17) definierte Abstand über der Bodenstruktur (2) im Falle der Kraftfahrzeugstruktur des oberen Segments deutlich vergrößert wird im Vergleich zu der Kraftfahrzeugstruktur des niedrigeren Segments trotz der Verwendung einer gemeinsamen Bodenstruktur (2),
- jede Seitenkomponente (17) ein inneres Element (19, 20) der Seitenkomponente, das mit einer entsprechenden in Längsrichtung verlaufenden lateralen Kante der Bodenstruktur (2) verschweißt ist, und ein äußeres Element (23, 24) der Seitenkomponente aufweist, das mit dem inneren Element (19, 20) der Seitenkomponente verschweißt ist,
- die Elemente (19, 20, 23, 24) der Seitenkomponente Querschnitte, die jeweils eine vertikal orientierte Omega-Form bilden mit Hohlräumen, die einander zugewandt sind, und obere Flansche (F1, G1) und untere Flanschen (F2, G2) haben, die miteinander verschweißt sind,
- die beiden inneren Elemente (19) der Seitenkomponente, die zur Bildung von Kraftfahrzeugstrukturen verwendet sind, die zu dem niedrigeren Segment gehören, jeweils eine im Wesentlichen vertikale Zwischenwand (V1) und eine obere Wand (O1) und eine untere Wand (O2) aufweisen, die geringfügig in Bezug auf eine horizontale Richtung, eine nach oben und die andere nach unten, in Richtung des oberen vertikalen Flansches (F1) und des unteren vertikalen Flansches (F2) geneigt sind;
- die beiden inneren Elemente (20) der Seitenkomponente, die zur Bildung von Kraftfahrzeugstrukturen verwendet sind, die zu dem oberen Segment gehören, jeweils eine Zwischenwand (V2) und eine obere Wand (R1) und eine untere Wand (R2) aufweisen, die geringfügig in Bezug auf eine horizontale Richtung, eine nach oben und die andere nach unten, in Richtung des oberen vertikalen Flansches (G1) und des unteren vertikalen Flansches (G2) geneigt sind, wobei die Zwischenwand (V2) einen unteren Bereich (V21), der im Wesentlichen vertikal ist, und einen oberen Bereich (V22) aufweist, der zumindest teilweise deutlich nach außen in der Richtung der oberen Wand (R1) geneigt ist, wobei der obere Bereich (V22) der Zwischenwand (V2) den größeren Anteil der vertikalen Erstreckung der Zwischenwand (V2) einnimmt,
- jede laterale Kante der Bodenstruktur (2) als einen vorherrschenden Bereich seiner Länge einen Flansch (L) aufweist, der vertikal nach oben gebogen ist, und mit der Zwischenwand des entsprechenden inneren Elements (19, 20) der Seitenkomponente verschweißt ist.

2. Verfahren zur Herstellung von Kraftfahrzeugstrukturen nach Anspruch 1, **dadurch gekennzeichnet, dass** die Zwischenwände (V1, V2) der beiden inneren Elemente (19, 20) der Seitenkomponente mittels mindestens eines Querelements (11) miteinander verbunden sind, das aufweist:
- einen zentralen Bereich (11), der für die Kraftfahrzeugstruktur des niedrigeren Segments und für die Kraftfahrzeugstruktur des oberen Segments gemeinsam ist; und
- Endbereiche, die durch separate Elemente (112, 113) gebildet sind, die starr mit gegenüberliegenden Enden des zentralen Bereichs verbunden sind und unterschiedliche Längen für die Kraftfahrzeugstruktur des niedrigeren Segments und für die Kraftfahrzeugstruktur des oberen Segments haben.

## Revendications

1. Procédé pour la production modulaire de structures de véhicule automobile pour deux segments ou catégories différent(e)s de véhicules automobiles, pour obtenir des structures de différentes dimensions dans la direction transversale (Y), dans lequel pour chaque structure de véhicule automobile, une structure de soubassement de carrosserie (1) est fournie et comportant une structure de plancher (2) et deux éléments latéraux (17) qui sont soudés aux deux bords latéraux longitudinaux de la structure de plancher (2),
ledit procédé étant **caractérisé en ce que** :
- ladite structure de plancher (2) est commune et adaptée pour produire à la fois des structures de véhicule automobile appartenant à un premier segment inférieur de véhicule automobile, et des structures de véhicule automobile appartenant à un deuxième segment supérieur de véhicule automobile, dans lequel ledit segment inférieur est **caractérisé par** une dimension inférieure du véhicule automobile au moins dans une direction transversale,
- pour former des structures de véhicule automobile du premier segment et du deuxième segment, des éléments latéraux (17) qui sont différents les uns des autres, sont utilisés toujours en association avec ladite structure de plancher commune (2),
- de manière à ce que l'espace défini entre les éléments latéraux (17) au-dessus de ladite structure de plancher (2) augmente considérablement dans le cas de ladite structure de véhicule automobile du segment supérieur par rapport à la structure de véhicule automobile du segment inférieur, malgré l'utilisation d'une structure de plancher commune (2),
- chaque élément latéral (17) comprend un élément interne (19, 20) d'élément latéral, soudé à un bord latéral longitudinal respectif de la structure de plancher (2), et un élément externe (23, 24) d'élément latéral, soudé à l'élément interne (19, 20) d'élément latéral,
- lesdits éléments (19, 20, 23, 24) d'élément latéral ont des sections transversales définissant chacune une forme d'oméga orientée verticalement, ayant des cavités se faisant face et des brides supérieures (F1, G1) et des brides inférieures (F2, G2) soudées ensemble,
- les deux éléments internes (19) d'élément latéral utilisés pour former des structures de véhicule automobile appartenant au segment inférieur présentent chacun une paroi intermédiaire essentiellement verticale (V1) et une paroi supérieure (O1) et une paroi inférieure (02) qui sont légèrement inclinées par rapport à une direction horizontale, l'un vers le haut et l'autre vers le bas, dans la direction de la bride verticale supérieure (F1) et de la bride verticale inférieure (F2) ;
- les deux éléments internes (20) d'élément latéral utilisés pour former des structures de véhicule automobile appartenant au segment supérieur présentent chacun une paroi intermédiaire (V2) et une paroi supérieure (R1) et une paroi inférieure (R2) qui sont légèrement inclinées par rapport à une direction horizontale, l'un vers le haut et l'autre vers le bas, dans la direction de la bride verticale supérieure (G1) et de la bride verticale inférieure (G2), ladite paroi intermédiaire (V2) ayant une partie inférieure (V21) qui est essentiellement verticale et une partie supérieure (V22) qui, au moins pour une partie, est nettement inclinée vers l'extérieur dans la direction de ladite paroi supérieure (R1), ladite partie supérieure (V22) de la paroi intermédiaire (V2) occupant la partie la plus importante du prolongement vertical de ladite paroi intermédiaire (V2),
- chaque bord latéral de la structure de plancher (2) présente pour une majeure partie de sa longueur, une bride (L) pliée verticalement vers le haut, soudée à la paroi intermédiaire de l'élément interne respectif (19, 20) d'élément latéral.

2. Procédé pour la production de structures de véhicule automobile selon la revendication 1, **caractérisé en ce que** les parois intermédiaires (V1, V2) des deux éléments internes (19, 20) d'élément latéral sont reliées entre elles au moyen d'au moins une traverse (11), comportant :
- une partie centrale (11) qui est commune pour la structure de véhicule automobile du segment inférieur et pour la structure de véhicule automobile du segment supérieur ; et
- des parties d'extrémité, qui sont constituées par des éléments séparés (112, 113) reliés rigidement aux extrémités opposées de ladite partie centrale et ayant des longueurs différentes pour la structure de véhicule automobile du segment inférieur et pour la structure de véhicule automobile du segment supérieur.
